# EUROPEAN PATENT APPLICATION

(11) **EP 1 603 056 A1**
(43) Date of publication of application: **07.12.2005**
(21) Application number: 04771754.1
(22) Date of filing: 11.08.2004
(51) Int. Cl.: G06F 17/30

(54) **TERMINAL DEVICE, IC CARD, AND SERVICE INFORMATION PROVIDING SYSTEM**

(30) Priority: 13.08.2003 JP 2003293194; 06.08.2004 JP 2004231135
(71) Applicant: MATSUSHITA ELECTRIC INDUSTRIAL CO., LTD., Kadoma-shi, Osaka 571-8501 (JP)
(72) Inventor: OTSU, Yuko, Kawasaki-shi, Kanagawa 211-0025 (JP)
(74) Representative: Grünecker, Kinkeldey, Stockmair & Schwanhäusser Anwaltssozietät
(86) International application number: PCT/JP2004/011793
(87) International publication number: WO 2005/017776

(57) **Abstract**

A terminal apparatus, IC card and service information providing system capable of efficiently distributing attached information without causing burdens on a user of the terminal apparatus and information provider are provided. For this purpose, when a cellular phone set (300) which is a terminal apparatus receives attached information from a ticket inspecting machine (400) which is a transmission apparatus, the cellular phone set filters the attached information based on personal attribute information registered beforehand in a display information generation section (206) of the IC card (200) inserted in the cellular phone set (300) and generates display information that matches the personal attribute. Then, the display function determination section (310) of the cellular phone set (300) determines the display function when displaying the display information according to the display information that matches the personal attribute and processing capacity of the cellular phone set (300) and displays the display information with the determined display function on a display section (309).

## Description

### Technical Field

The present invention relates to a terminal apparatus which receives attached information, IC card and service information providing system terminal apparatus made up of an IC card and a transmission apparatus which transmits attached information.

### Background Art

Conventionally, portable terminals such as cellular phone sets and portable type information terminals having an e-mail function and browser function are becoming widespread and information providing services which distribute various types of service information using these functions are being developed.

For example, the electronic information system with a distribution condition described in the Unexamined Japanese Patent Publication No.2002-244999 stores electronic information in an electronic mail box provided for each user and distributes header information on the electronic information to the user through the electronic mail box. The invention proposes a service whereby the user sees header information received, instructs the distribution of the electronic information from the electronic mail box if the user wants to receive the electronic information and the information provider distributes the electronic information to be provided according to the user' s attribute to whom the electronic information is distributed.

Furthermore, the portable terminal described in the Unexamined Japanese Patent Publication No.2003-30530 proposes a service that allows the user to select information to be displayed based on an instruction on the distribution of information enclosed in contents acquired via a network and personal information recorded in a personal identification card so that the user can receive advertisement information which matches the user's attribute.

However, the aforementioned electronic information system with a distribution condition described in the Unexamined Japanese Patent Publication No.2002-244999 needs to control personal information using a server, and this increases a system cost and requires the user to send the server an instruction for providing information, which involves a complicated operation.

Furthermore, in the case of the aforementioned portable terminal described in the Unexamined Japanese Patent Publication No.2003-30530, the information provider needs to organize distribution information according to the user's attribute beforehand, which constitutes a great burden on the information provider, making it difficult to develop the service.

### Disclosure of Invention

It is an object of the present invention to provide a terminal apparatus, IC card and service information providing system capable of efficiently distributing attached information without causing burdens on terminal apparatus users and an information provider.

This object can be attained by a terminal apparatus that receives attached information from a transmission apparatus, comprising a generation section that filters the attached information based on the user's personal information and generates output information, a determination section that determines an output function when outputting the output information based on the output information and processing capacity of the terminal apparatus and a processing section that processes the output of the output information according to the determined output function.

Furthermore, this object can be attained by an IC card connected to the terminal apparatus for receiving attached information from the transmission apparatus, comprising a generation section that filters the attached information based on the user's personal information, generates output information and outputs the output information to the terminal apparatus.

Furthermore, this object can be attained by a terminal apparatus provided with an IC card that receives attached information from a transmission apparatus, comprising a determination section that determines an output function when outputting the output information based on the output information generated by the IC card by filtering the attached information based on the user' s personal information and processing capacity of the terminal apparatus, and a processing section that processes the output of the output information according to the determined output function.

Furthermore, this object can be attained by a terminal apparatus provided with an IC card that receives attached information from a transmission apparatus, comprising a processing section that processes the output of the output information based on the output information generated by the IC card by filtering the attached information based on the user' s personal information and processing capacity of the terminal apparatus according to the output function when outputting the determined output information.

Furthermore, this object can be attained by a service information providing system made up of a transmission apparatus that transmits attached information and a terminal apparatus that receives the attached information from the addition apparatus, the terminal apparatus comprising a generation section that filters the attached information based on the user's personal information and generates output information and a determination section that determines the output function when the terminal apparatus outputs the output information based on said output information and processing capacity of said terminal apparatus.

### Brief Description of Drawings

FIG.1 is a block diagram showing the configuration of a service information providing system according to Embodiment 1 of the present invention;
FIG.2 is a block diagram showing the internal configuration of the display information generation section FIG.1;
FIG.3 illustrates an example of personal information stored in the card information storage section in FIG.2;
FIG.4 is a block diagram showing the internal configuration of the display function determination section in FIG.1;
FIG.5 illustrates an example of processing capacity information stored in the terminal processing capacity storage section in FIG.4;
FIG. 6 is a sequence diagram illustrating the overall operation in the service information providing system according to Embodiment 1;
FIG.7 is a flow chart illustrating the operation of the display information generation section in FIG.2;
FIG.8 is a flow chart illustrating the operation of the display function determination section in FIG.4;
FIG.9 is a block diagram showing the configuration of a service information providing system according to Embodiment 2 of the present invention;
FIG.10 illustrates an example of attached information notifying congestion situations of attractions of a theme park according to Embodiment 1;
FIG.11 illustrates an example of attached information filtered from the attraction congestion situation information in FIG.10;
FIG.12 illustrates an example of attached information notifying sales information of each floor of a department store according to Embodiment 2;
FIG.13 illustrates an example of the attached information filtered from the sales information in FIG.12;
FIG.14 illustrates another example of the attached information filtered from the sales information in FIG.12; and
FIG.15 illustrates an example of the attached information filtered from a bus arrival time table according to Embodiment 3.

### Best Mode for Carrying out the Invention

An embodiment of the present invention is intended to realize distribution of information according to attributes of individuals by filtering attached information transmitted from a transmission apparatus installed by an information provider through personal information such as attribute information of individuals registered beforehand in an IC card incorporated in the terminal apparatus, automatically displaying attached information that matches the personal attributes according to the processing capacity of the terminal apparatus without causing burdens on the user of the terminal apparatus and information provider.

With reference now to the attached drawings, embodiments of the present invention will be explained in detail below.

### (Embodiment 1)

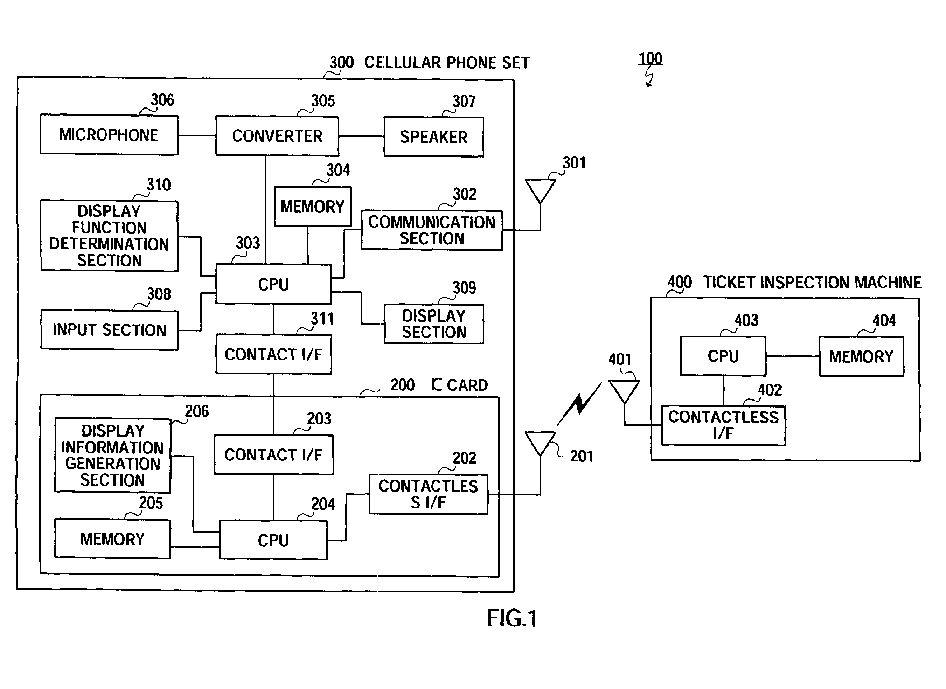

FIG.1 is a block diagram showing the configuration of a service information providing system according to Embodiment 1 of the present invention. The service information providing system shown in FIG.1 is provided with a cellular phone set 300 which is a terminal apparatus of the present invention, an IC card 200 inserted in a cellular phone set 300, and a ticket inspecting machine 400 which is a local server of the transmission apparatus of the present invention.

Furthermore, the IC card 200 may be inserted in a manner attachable/detachable to/from the cellular phone set 300 through a card slot, etc., such as an SIM (Subscriber Identity Module) card or UIM (User Identity Module) card or may be fixedly connected such as chip embedding or may also be used as a totally independent device without being connected.

The IC card 200 is provided with an antenna 201, a contactless I/F 202, a contact I/F 203, a CPU 204, a memory 205 and a display information generation section 206.

The contactless I/F 202 is provided with a wireless communication function using an air interface and protocol technology based on, for example, the ISO (International Organization for Standardization)/IEC (International Electrotechnical Commission) 18000 standards.

The contactless I/F 202 receives a command sent from a contactless I/F 402 in the ticket inspecting machine 400 through the antenna 201 and an antenna 401 of the ticket inspecting machine 400, enters into communication and gets connected, sends ticket inspection data input from the CPU 204 to the contactless I/F 402 as a response, receives "attached information" or "service processing information (e.g., ticket inspection information) + attached information" sent from the contactless I/F 402 and outputs to the CPU 204.

The contact I/F 203 contacts a contact I/F 311 in the cellular phone set 300, outputs various types of information and control signals input from the CPU 204 to the contact I/F 311 and outputs various types of information and control signals input from the contact I/F 311 to the CPU 204.

The CPU (Central Processing Unit) 204 carries out processing such as control over various sections in the IC card 200 according to a control program stored in the memory 205, output of attached information out of the "attached information" or "service processing information (e.g., ticket inspection information) + attached information" input from the contactless I/F 202 to the display information generation section 206 and output of the display information based on the attached information input from the display information generation section 206 to the contact I/F 203.

The memory 205 stores the control program to be executed by the CPU 204 and ticket inspection data, etc.

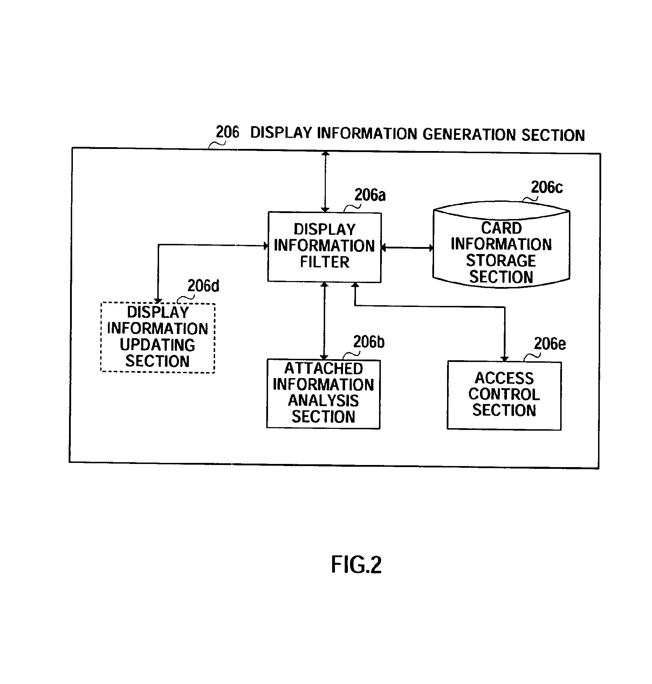

As shown in FIG.2, the display information generation section 206 is provided with a display information filter206a, an attached information analysis section 206b, a card information storage section 206c, a display information updating section 206d and an access control section 206e.

When the display information filter 206a receives attached information from the CPU 204, it reads out personal information of a user prestored in the card information storage section 206c, outputs an analysis item based on this personal information and the input attached information to the attached information analysis section 206b, and when it decides the attached information is display information for the user using the analysis result of the attached information input from the attached information analysis section 206b and previously read personal information, the display information filter 206a outputs the attached information to the display information updating section 206d so as to reedit the attached information into a data format specified by the information provider and outputs the edited attached information to the CPU 204.

When the attached information includes the address of the access destination and this address is set to be automatically accessed, the display information filter 206a reads out the user' s access condition prestored in the access control section 206e, decides whether it is possible to enter into communication and get connected with the access destination or not based on this access condition and if it is not possible, the display information filter 206a stops sending the attached information to the cellular phone set 300.

The attached information analysis section 206b analyzes the attached information input from the display information filter 206a according to an analysis item input from the display information filter 206a and outputs the analysis result to the display information filter 206a. When analyzing the attached information based on the analysis item, the attached information analysis section 206b performs an analysis by categorizing each analysis item into a portion discriminable with YES/NO and a portion not discriminable with YES/NO which should be analyzed using a learning/inference function.

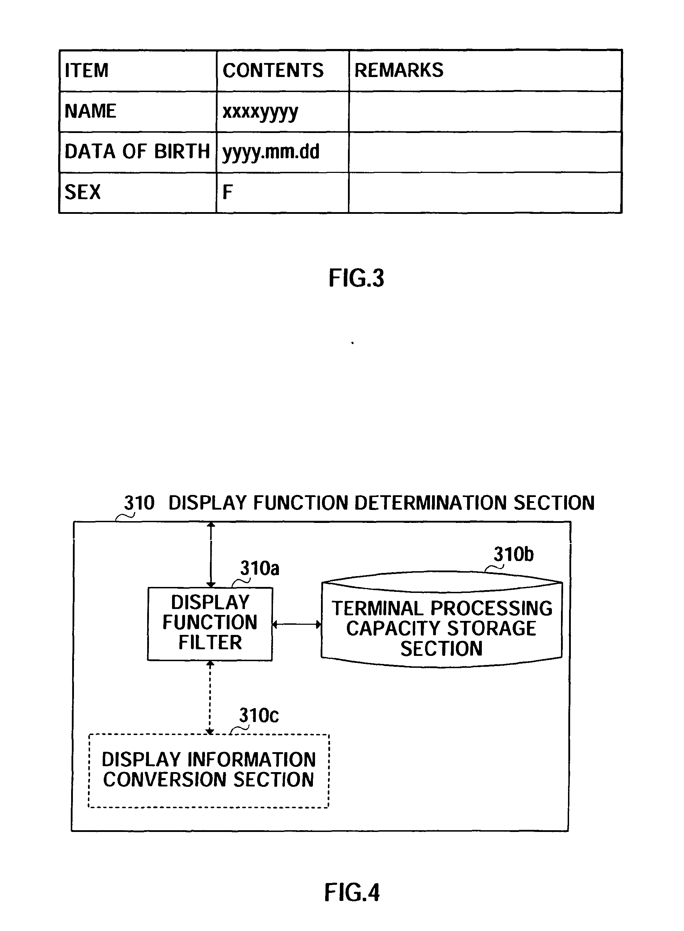

The card information storage section 206c stores personal information of the user of the cellular phone set 300 and the user of the IC card 200 itself. As shown in FIG. 3, this personal information is, for example, name, date of birth, sex, etc. The personal information stored in this card information storage section 206c is not entered by the user, but is the personal information prestored by a reliable third party, for example, a communication company operating the cellular phone set 300. When the card information storage section 206c stores the personal information of the IC card 200 itself, even if the cellular phone set 300 is replaced with a new one by purchase, it is possible to continue to use the personal information stored so far in the IC card 200 if the IC card 200 is used as is.

Furthermore, the personal information is stored in a non-rewritable area in the card information storage section 206c. With suchmeasures, it is possible to prevent an act of user spoofing by personal information tampering, and also prevent distribution of attached information to any third party who is not the user intended by the information provider.

Furthermore, the personal information is not limited to the information shown in FIG.3, but can be any information related to the attached information on services provided such as address, telephone number, mail address, card number, cardholder, commutation ticket, commuter pass, ticket, driver's license, insurance card, consultation ticket, passport, employee ID card.

The display information updating section 206d reedits the attached information input from the display information filter 206a into a data format sent from the ticket inspecting machine 400 and outputs to the display information filter 206a.

Here, this display information updating section 206d is an additional function and need not always be included. In this case, the cellular phone set 300 can assume the function of the display information updating section 206d.

The access control section 206e stores an access condition (e.g., addresses which cannot be accessed, types of sites, etc.) desired by the user of the cellular phone set 300 beforehand.

The cellular phone set 300 is provided with an antenna 301, a communication section 302, a CPU 303, a memory 304, a converter 305, a microphone 306, a speaker 307, an input section 308, a display section 309, a display function determination section 310, and the contact I/F 311.

The communication section 302 accesses a base station through the antenna 301, gets connected with a cellular phone set on the other end or ISP (Internet Services Provider) from the base station over a network and has a communication function of transmitting/receiving a speech packet or data packet. The communication section 302 outputs the received speech packet or data packet to the CPU 303.

The CPU 303 controls various sections of the cellular phone set 300 according to a control program stored in the memory 304, exchanges speech packets between the communication section 302 and converter 305, decodes a data packet input from the communication section 302, displays the decoded data packet on the display section 309 and packetizes text data input from the input section 308 and outputs to the communication section 302.

Furthermore, when the CPU 303 receives attached information from the contact I/F 311, it starts the display function determination section 310, outputs the input attached information to the display function determination section 310 and displays the attached information on the display section 309 according to a display function startup request (editor or browser) input from the display function determination section 310 using the specified display function.

Furthermore, the CPU 303 detects and controls the communication status (communication is possible/communication is not possible) of the communication section 302 all the time and notifies the display function determination section 310 of the communication status in response to a reference request from the display function determination section 310.

The memory 304 stores a control program, editor program, browser program, etc., executed by the CPU 303.

The converter 305 converts a speech signal input from the microphone 306 into a speech packet, outputs the speech packet to the CPU 303, or decodes a speech packet input from the CPU 303, restores the speech signal and outputs the speech signal to the speaker 307.

The microphone 306 converts the user's speech to a speech signal and outputs the speech signal to the converter 305. The speaker 307 reproduces the speech signal input from the converter 305. The input section 308 is provided with a power key, numeric keypad, various types of function keys, etc., and outputs an input signal corresponding to the key operation by the user to the CPU 303.

The display section 309 is constructed of a display device such as a liquid crystal display panel and displays attached information, etc. , according to the display data and display control signal input from the CPU 303.

As shown in FIG.4, the display function determination section 310 is provided with a display function filter 310a, a terminal processing capacity storage section 310b and a display information conversion section 310c.

The display function filter 310a is started by the CPU 303 and when attached information is input, it determines a display function (a browser or editor) with reference to processing capacity information prestored in the terminal processing capacity storage section 310b based on the contents of the attached information, decides data out of the attached information which needs to be converted to display data, outputs the data to the display information conversion section 310c so that the data is converted to display data and outputs the display data together with the determined display function to the CPU 303.

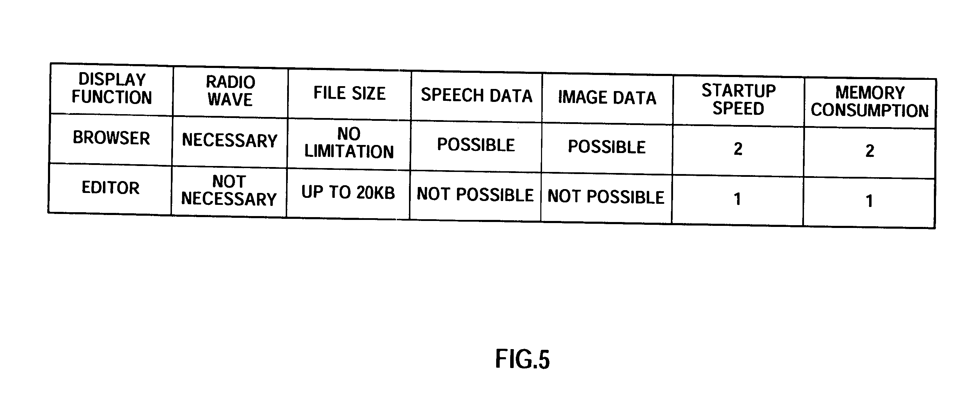

The terminal processing capacity storage section 310b stores processing capacity information on the cellular phone set 300. As shown in FIG.5, this processing capacity information stores whether radio wave is necessary or not, reproducible file size, whether speech data is reproducible or not, whether image data is reproducible or not, startup speed and memory consumption in association with each display function of the browser or editor.

In this case, "whether radio wave is necessary or not" indicates whether a communication by the communication section 302 is necessary or not in order to display attached information. When a browser is selected as the display function, the display function filter 310a requires radio wave, and therefore requests a notification of the communication status (whether communication is possible or not) of the communication section 302 under the control of the CPU 303.

Furthermore, in FIG.5, "1" or "2" is set as the startup speed, and in this case, this indicates that the startup by the editor is quicker than that by the browser. "1" or "2" is also set as the memory consumption, and this indicates that the editor consumes less memory than the browser.

The display information conversion section 310c converts the data input from the display function filter 310a to display data and outputs the display data to the display function filter 310a. Here, the display information conversion section 310c is an additional function and need not always be included. In this case, the IC card 200 may assume the function of the display information conversion section 310c.

The ticket inspecting machine 400 is provided with the antenna 401, the contactless I/F 402, a CPU 403 and a memory 404.

The contactless I/F 402 has a wireless communication function using an air interface and protocol technology based on, for example, the ISO/IEC 18000 standard. The contactless I/F 402 sends a command to the contactless I/F 202 in the IC card 200 through the antenna 401 and antenna 201 of the IC card 200, enters into communication and gets connected, receives ticket inspection data from the contactless I/F 202 as a response, outputs the ticket inspection data to the CPU 403 and sends the ticket inspection information and service-related attached information input from the CPU 403 to the contactless I/F 202.

The CPU 403 controls the respective sections in the ticket inspecting machine 400 according to a control program stored in the memory 404, carries out ticket inspection processing on the ticket inspection data input from the contactless I/F 402, outputs ticket inspection information to the contactless I/F 402 as the processing result, reads out service-related "attached information" or "service processing information (e.g., ticket inspection information) + attached information" from the memory 404 based on the ticket inspection data received and outputs the information to the contactless I/F 402.

The memory 404 stores a control program executed by the CPU 403, service processing information on services and attached information, etc.

In this embodiment, the various types of information received from the ticket inspecting machine 400 are mainly displayed and output by the display section 309 of the cellular phone set 300, and therefore the "output information" in the present invention corresponds to the "display information" in the embodiment, the "output function" in the present invention corresponds to the "display function" in the embodiment, the "generation section" in the present invention corresponds to the "display information generation section 206" in the embodiment, the "determination section" in the present invention corresponds to the "display function determination section 310" and "display function determination section 601 in the embodiment. Furthermore, the "processing section" in the present invention corresponds to the "CPU 303" in the embodiment and the "communication section" in the present invention corresponds to the "communication section 302" in the embodiment, the "output capacity acquisition section" and "communication status acquisition section" in the present invention correspond to the "CPU 204" of the IC card 600 in Embodiment 2. However, these are only examples and the present invention is not particularly limited and it is also possible to provide a speech function in addition to the display function as one of output functions and use the speech output function as a candidate of the output function or use only the speech function instead of the display function.

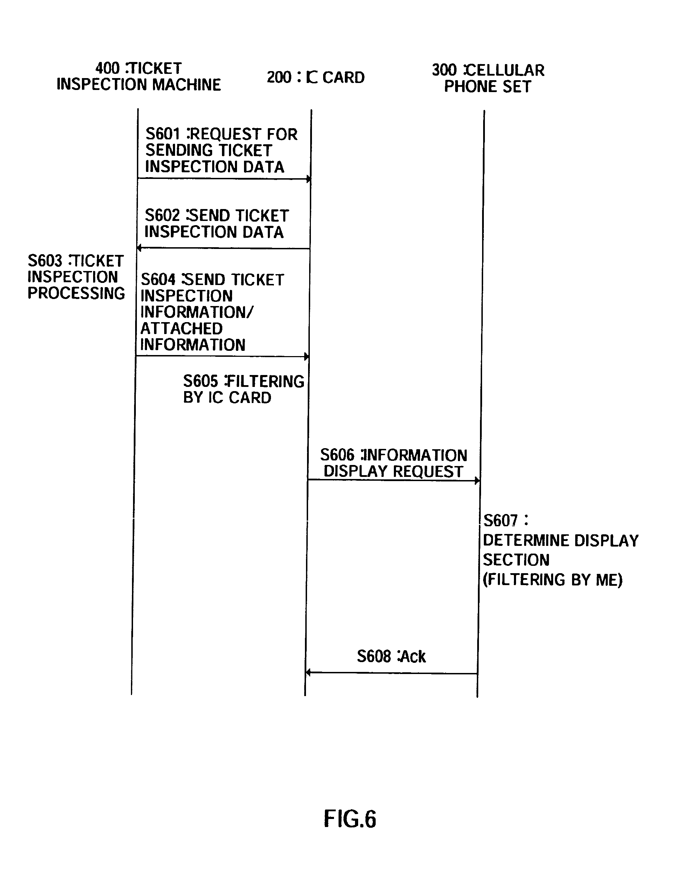

The overall operation of the service information providing processing by the service information providing system 100 of the present invention will be explained with reference to FIG.6 below.

In step S601 in FIG.6, the contactless I/F 402 in the ticket inspecting machine 400 sends a command requesting the contactless I/F 202 in the IC card 200 to send ticket inspection data. Next, in step S602, the contactless I/F 202 in the IC card 200 sends the ticket inspection data read from the memory 205 by the CPU 204 to the contactless I/F 402 as a response to the command requesting the transmission of the ticket inspection data sent from the contactless I/F 402 in the ticket inspecting machine 400.

Next, in step S603, the CPU 403 in the ticket inspecting machine 400 carries out ticket inspection processing on the ticket inspection data received from the contactless I/F 202 in the IC card 200 by the contactless I/F 402 as the response, outputs ticket inspection information to the contactless I/F 402 as the processing result, reads out service-related "attached information" or "service processing information (e.g., ticket inspection information) + attached information" based on the received ticket inspection data from the memory 404 and outputs the information to the contactless I/F 402.

Next, in step S604, the contactless I/F 402 in the ticket inspecting machine 400 sends the "attached information" or "service processing information (e.g., ticket inspection information) + attached information" input from the CPU 403 to the contactless I/F 202 in the IC card 200. At this time, the contactless I/F 202 in the IC card 200 receives the "attached information" or "service processing information (e.g., ticket inspection information) + attached information" from the contactless I/F 402 and outputs the information to the CPU 204.

Next, in step S605, the CPU 204 in the IC card 200 outputs the attached information out of the "attached information" or "service processing information (e.g., ticket inspection information) + attached information" input from the contactless I/F 202 to the display information generation section 206. Then, the display information generation section 206 performs filtering processing on the attached information input from the CPU 204.

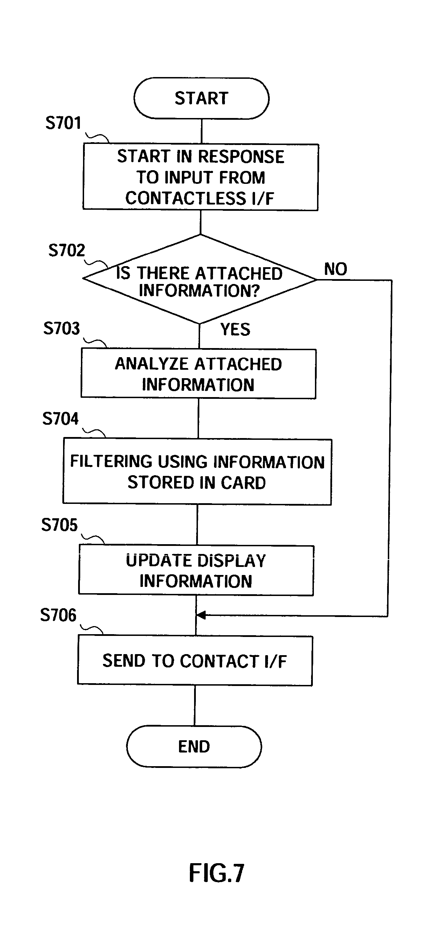

The filtering processing of attached information executed by this display information generation section 206 will be explained with reference to the flow chart shown in FIG.7.

First, in step S701, the display information generation section 206 is started by the CPU 204 when the CPU 204 receives the attached information input to the contactless I/F 202. When the CPU 204 inputs the attached information to the display information filter 206a (step S702: YES), in step S703, the display information filter 206a reads out the personal information of the user prestored in the card information storage section 206c, outputs the analysis item based on this personal information and input attached information to the attached information analysis section 206b and executes analysis processing on the attached information.

Next, in step S704, the attached information analysis section 206b performs an analysis by categorizing each analysis item input from the display information filter 206a into a portion discriminable with YES/NO and a portion not discriminable with YES/NO which should be analyzed using a learning/inference function and outputs the analysis result to the display information filter 206a.

Next, in step S705, using the analysis result of the attached information input from the attached information analysis section 206b and previously read personal information, when the display information filter 206a decides that the attached information is display information for the user, it outputs the attached information to the display information updating section 206d so as to reedit the attached information into a data format specified by the information provider and outputs the reedited attached information to the CPU 204.

Furthermore, when the attached information includes the address of the access destination and this address is set to be automatically accessed, the display information filter 206a reads out the access condition of the user prestored in the access control section 206e, decides whether it is possible or not to enter into communication and get connected with this access destination based on this access condition and outputs, when it is possible, the startup instruction information for starting the browser function of the cellular phone set 300 to the CPU 204.

Next, in step S706, the CPU 204 outputs the reedited attached information input from the display information filter 206a and the startup instruction information of the browser function to the contact I/F 203 and terminates this processing.

Returning to FIG.6, in step S606, the contact I/F 203 in the IC card 200 outputs the reedited attached information input from the CPU 204, startup instruction information of the browser function and information display request to the contact I/F 311 in the cellular phone set 300.

The contact I/F 311 in the cellular phone set 300 outputs the reedited attached information input from the contact I/F 203 in the IC card 200, startup instruction information of the browser function and information display request to the CPU 303. The CPU 303 outputs the reedited attached information out of the reedited attached information input from the contact I/F 311, startup instruction information of the browser function and information display request to the display function determination section 310.

Next, in step S607, the display function determination section 310 performs display function determination processing based on the reedited attached information input from the CPU 303.

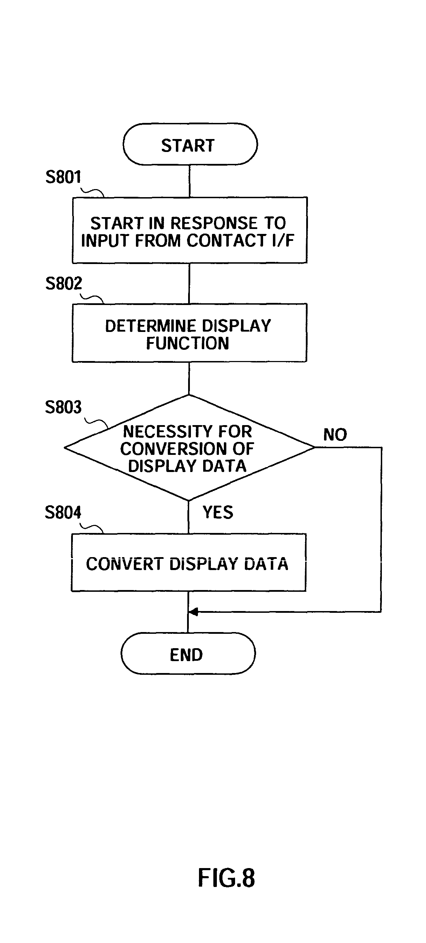

The display function determination processing executed by this display function determination section 310 will be explained with reference to the flow chart shown in FIG.8.

First, in step S801, when the CPU 303 receives the attached information input to the contact I/F 311, the display function determination section 310 is started by the CPU 303. Then, in step S802, when the display function filter 310a receives the reedited attached information from the CPU 303, it determines the display function (a browser or editor) with reference to the processingcapacityinformation prestored in the terminal processing capacity storage section 310b based on the contents of the attached information.

Next, in step 5803, the display function filter 310a decides the display data out of the attached information which needs to be converted. When the display function filter 310a decides that the display data includes data that needs to be converted (step S803: YES), it outputs the data to the display information conversion section 310c so that the data is converted to display data (step S804).

Then, the display function filter 310a outputs a startup request of the determined display function and converted display data to the CPU 303 and terminates this processing. Furthermore, when the display function filter 310a decides that the display data includes no data that needs to be converted (step S803: NO), it outputs a startup request of the determined display function to the CPU 303 and terminates this processing.

Next, the CPU 303 starts an editor program or browser program stored in the memory 304 according to the startup request of the display function input from the display function determination section 310 and display data and displays the reedited attached information and the ticket inspection information received in step S606 on the display section 309.

Returning to FIG.6, in step S608, the CPU 303 in the cellular phone set 200 sends a response (Ack) indicating an end of the display processing from the contact I/F 311 to the contact I/F 203 in the IC card 200 and terminates the processing.

Furthermore, when the display function filter 310a in the display function determination section 310 selects a browser as the display function, it requests the CPU 303 to notify the communication status (communication is possible/communication is not possible) of the communicationsection302becausetheterminalprocessing capacity information in FIG.5 is set to "radio wave is necessary".

Then, when the display function filter 310a receives thecommunicationstatus (communicationispossible) from the CPU 303, it outputs a browser startup request to the CPU 303 so as to start the browser and causes the display section 309 to display the reedited attached information.

Furthermore, when the display function filter 310a receives the communication status (communication is not possible) from the CPU 303, it cannot start the browser, and therefore it outputs an editor startup request to the CPU 303 so as to start the editor and causes the display section 309 to display text information out of the reedited attached information.

In this case, the CPU 303 may also save the attached information which cannot be displayed because communication is not possible in the memory 304, and when communication is possible, the CPU 303 may display information indicating that it is possible to display attached information and start the browser, etc., on the display section 309, thus urging the user to operate and confirm the attached information.

Furthermore, when the attached information received from the ticket inspecting machine 400 includes the address of the access destination from which service information is acquired and this address is set to be automatically accessed, the display information filter 206a in the display information generation section 206 of the IC card 200 reads out the access condition of the user prestored in the access control section 206e, decides whether it is possible or not to enter into communication and get connected with the access destination based on this access condition, and if it is not possible to do so, the display information filter 206a stops sending the attached information to the cellular phone set 300.

Here, the timing at which the communication status is acquired may be any timing if it is at least before the access method determination processing.

In this case, the display information filter 206a may also cause the cellular phone set 200 to display information indicating that the attached information does not match the access condition so that the user decides whether or not to access the information providing site.

As shown above, according to the service information providing system 100 of this embodiment, filtering is performed using attribute information of individuals prestored in the IC card 200 inserted in the cellular phone set 300 and the attached information that matches the personal attribute can be displayed in an appropriate form according to the processing capacity of the cellular phone set 300, and therefore it is possible to reliably distribute attached information according to the personal attribute without causing burdens on the user of the cellular phone set 300 and the information provider who provides the attached information to the ticket inspecting machine 400.

As the processing when the attached information includes the address of the access destination, if, for example, a URL is described as the access information, it is also possible to access the URL and display the attached information or display the URL (accessible by clicking) without accessing the URL. When the use of communication section requires a communication fee to access the URL, this can prevent a communication fee from being generated without the consent of the user.

Furthermore, when, for example, a URL is described as access information, if the communication status indicates that connection to the Internet to access the URL is not possible, it is possible to display a message suggesting the user to move to a place where the Internet is accessible so as to urge the user to access the Internet.

Furthermore, the personal information prestored in the IC card 200 is not entered by the user but registered beforehand by a reliable third party, for example, a communication company operating the cellular phone set 300 and stored in a non-rewritable area in the card information storage section 206c, which prevents attached information from being distributed by a spoofed user by tampering with personal information or users to whom the information provider is not intended to give the attached information.

Therefore, it is possible to realize a service information providing system at a low cost and also improve the reliability.

### (Embodiment 2)

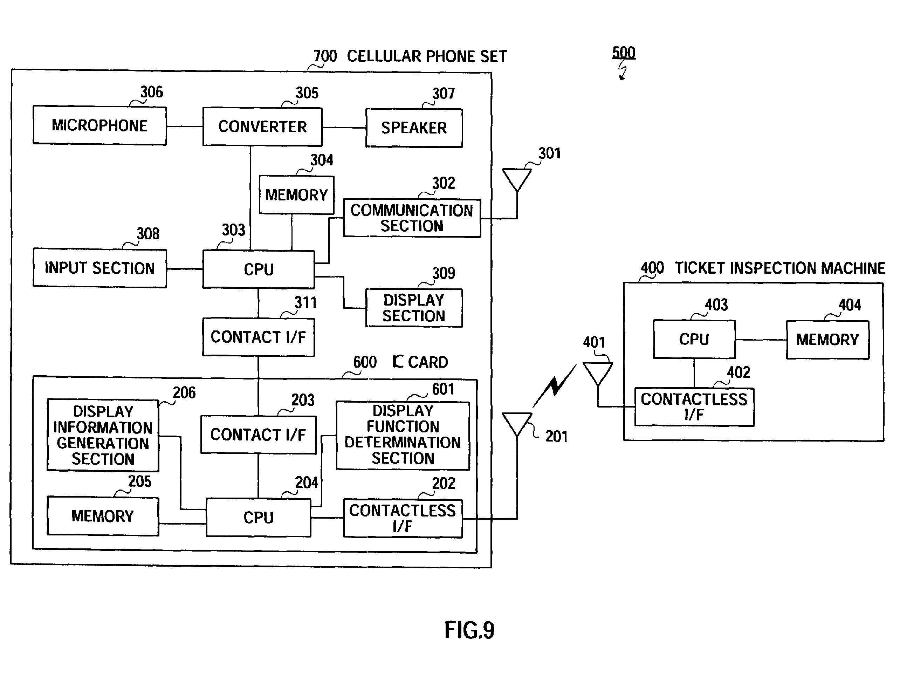

FIG.9 is a block diagram showing the configuration of a service information providing system according to Embodiment 2 of the present invention and the same components as those of the service information providing system 100 shown in FIG.1 are assigned the same reference numerals and explanations thereof will be omitted.

In the service information providing system 500 shown in FIG. 9, the difference in the configuration from the service information providing system 100 shown in FIG.1 is that a display function determination section 601 is provided in an IC card 600. The configuration of this display function determination section 601 is the same as the configuration of the display function determination section 310 provided in the cellular phone set 300 in FIG.1, and so the illustration and explanation of the configuration will be omitted.

Furthermore, in FIG.5, the cellular phone set 700 has the same configuration as that of the cellular phone set 300 shown in FIG. 1 except the display function determination section 310, and so explanations thereof will be omitted.

Thus, with the display function determination section 601 provided in the IC card 600, the cellular phone set 700 receive attached information and a display function startup request only from the IC card 600 and it is possible to use a general-purpose cellular phone set.

Thus, the service information providing system 500 can be implemented by only providing the user with the IC card 600, making it possible to further reduce the system cost. Furthermore, the information provider can easily set an access condition related to attached information according to the attribute of a target user and can easily develop a service.

In this case, instead of storing the processing capacity information of the cellular phone set in the terminal processing capacity storage section 310b in the display function determination section 601, it is possible to store in the memory 205 a program that acquires the processing capacity information from the cellular phone set 700 when the IC card 600 is inserted in the cellular phone set 700 for the first time.

By so doing, the user of the cellular phone set 700 can save time and trouble to set processing capacity information in the IC card 600 and also increase convenience of the service information providing system.

Furthermore, likewise, when the IC card 600 is inserted in this cellular phone set 700, this embodiment can also be adapted so that the IC card 600 acquires information on the communication status in the cellular phone set 700 from the cellular phone set 700 and stores in the memory 205 a program for determining the display function when the output information is displayed based on the output information, processing capacity of the cellular phone set 700 and acquired communication status of the cellular phone set 700.

By so doing, the IC card 600 determines even the display function of output information in the cellular phone set 700, and therefore it is possible to automatically determine the method of accessing access information according to the communication status, save time and trouble to monitor the communication status and select an access method, and the cellular phone set 700 needs no longer to install the program therefor.

Specific examples where personal information is guided using the service information providing system in the aforementioned embodiments will be explained below.

### Embodiment 1.

This embodiment will describe a case where a user is notified of congestion situations of attractions in a theme park.

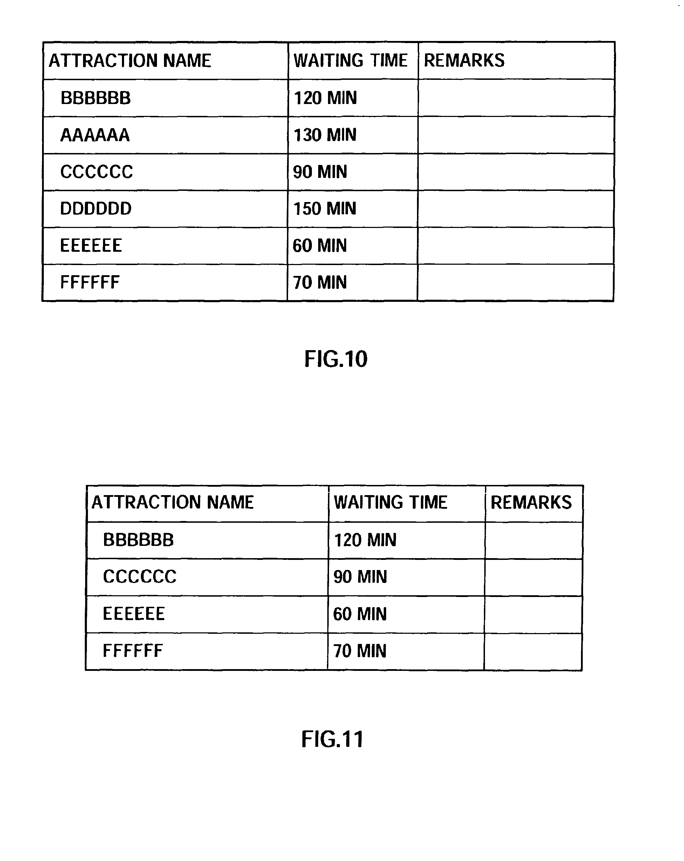

FIG. 10 shows an example where congestion situations of attractions in a theme park are notified as attached information to be transmitted from the aforementioned ticket inspecting machine 400 to the IC card 200 (or 600) inserted in the cellular phone set 300 (or 700).

A ticket inspecting machine is installed as a gate of each attraction and the user can get his/her ticket inspected by bringing the cellular phone set incorporating the IC card close to the gate. In this case, the display information generation section in the IC card filters attraction congestion situation information transmitted from the ticket inspecting machine based on ticket inspection data with the names of attractions on which ticket inspection has already been conducted, determines attached information to be displayed and outputs the attached information to the cellular phone set.

The attraction congestion situation information transmitted from the ticket inspecting machine shown in FIG.10 includes respective waiting times for attraction names "BBBBBB, AAAAAA, CCCCCC, DDDDDD, EEEEEE, FFFFFF."

The user has got the tickets inspected for the attractions "BBBBBB, CCCCCC, EEEEEE, FFFFFF" and the corresponding ticket inspection data is stored in the memory of the IC card.

The IC card which has received the attraction congestion situation information in FIG.10 from the ticket inspecting machine filters the received attraction congestion situation information based on the ticket inspection data stored in the memory, determines the attached information to be displayed shown in FIG.11 and outputs the attached information to the cellular phone set.

Therefore, the user can confirm waiting times of popular attractions using the cellular phone set at hand without actually visiting the respective locations and efficiently enjoy the theme park.

### Embodiment 2.

This Embodiment 2 will describe a case where event information is guided to a user individually.

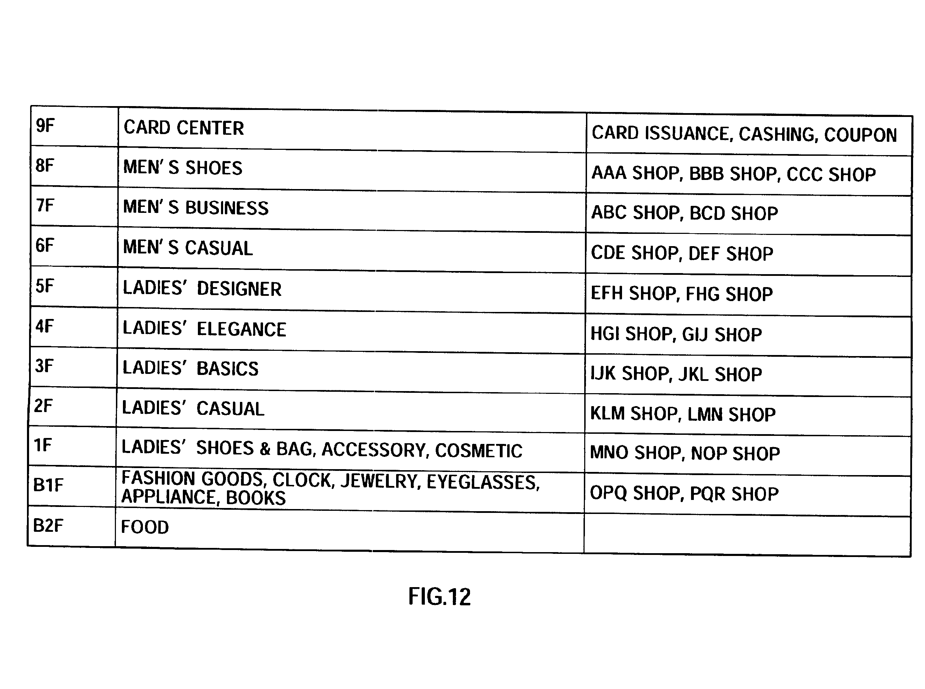

FIG.12 shows an example of a case where sales information of a department store is notified as attached information to be transmitted from the ticket inspecting machine 400 to the IC card 200 (or 600) inserted in the cellular phone set 300 (or 700).

A ticket inspecting machine is installed at the entrance of a department store or checkout station and the user can get a ticket inspected by bringing the cellular phone set incorporating the IC card close to the ticket inspecting machine at the entrance or checkout station. In this case, the display information generation section in the IC card filters the sales information transmitted from the ticket inspecting machine based on the prestored personal information, determines the attached information to be displayed and outputs the attached information to the cellular phone set.

The sales information transmitted from the ticket inspecting machine shown in FIG.12 includes guide information of each floor (B2F to 9F) of the department store and names of stores holding a sales campaign.

Furthermore, the personal information includes a name, sex, date of birth and credit card information. The keyword to be filtered by the display information generation section in the IC card is "sex."

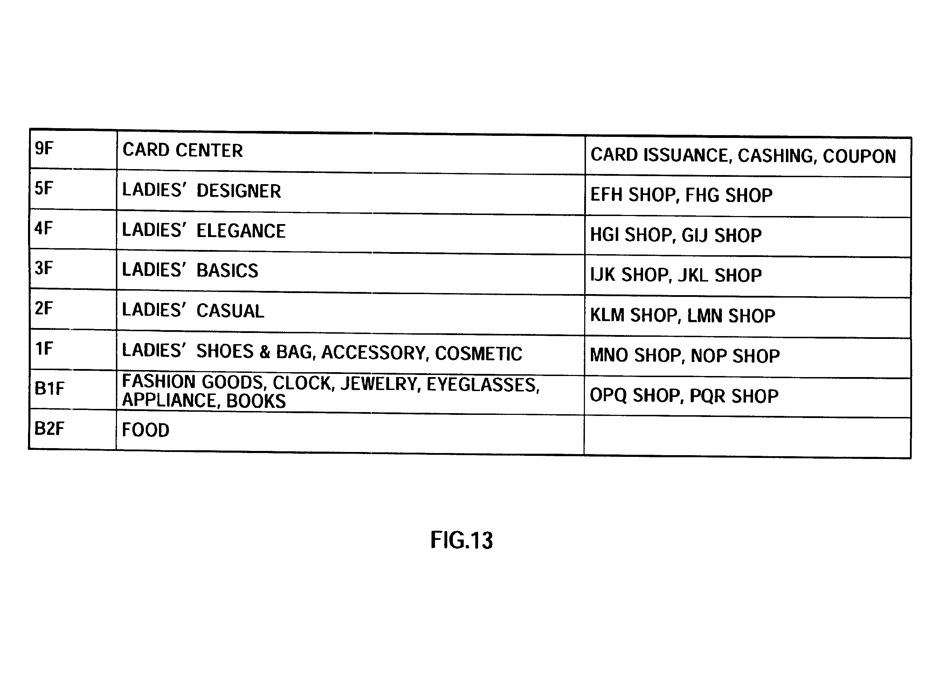

The IC card which has received the attraction congestion situation information in FIG.12 from the ticket inspecting machine filters the received sales information by "sex" based on the personal information stored in the memory, determines the attached information to be displayed shown in FIG.13 and outputs the attached information to the cellular phone set.

Therefore, since information is displayed with unnecessary information filtered out, the user can visit stores selling favorite articles at each floor efficiently and avoid such a situation that the user misses a sale which is held at a place different from a usual place.

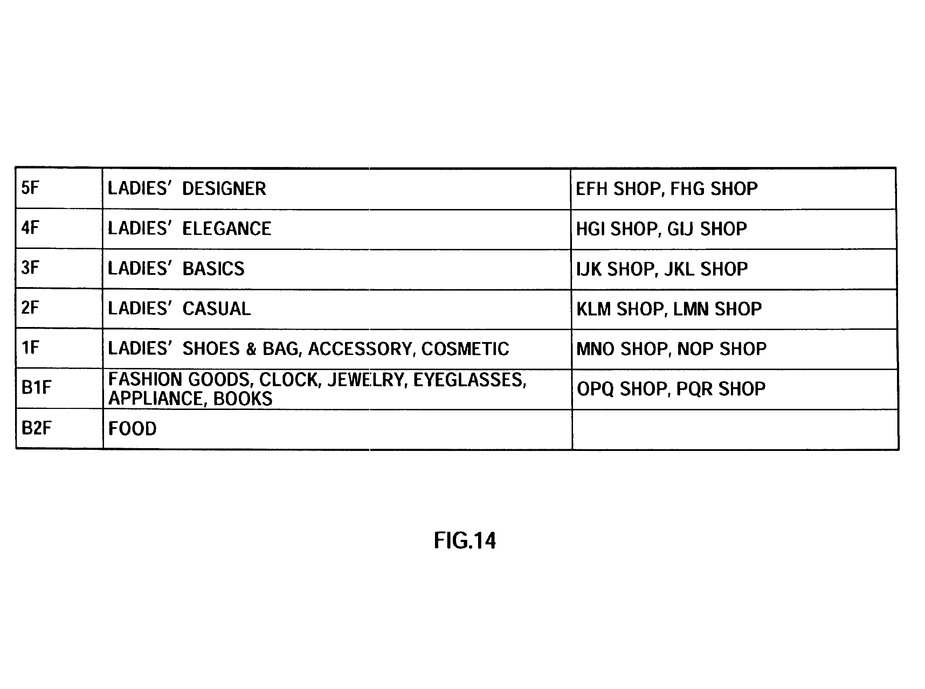

Furthermore, the personal information includes the name, sex, date of birth, member's card information, credit card information and when the keywords used for filtering by the display information generation section in the IC card are "sex" and "member' s card information", an example of attached information filtered from the sales information in FIG.12 is shown in FIG.14.

Furthermore, when the user is away from a base station of the cellular phone set and the display function determination section in the cellular phone set decides that it is not possible to access the information providing site from the cellular phone set, it outputs an editor startup request to the CPU to display attached information in a text format (URL section is displayed with an underline or color in a distinguishable way) on the display section.

This allows the user to move to a range of the base station in which communication is possible first and then access the information providing site, thus ensuring that the service information is presented to the user.

In this way, it is possible to easily change attached information to be filtered from sales information by setting keywords and easily realize a distribution service of sales information according to the personal attribute of the user.

### Embodiment 3.

This Embodiment 3 will describe a case where bus arrival time information is guided to a user individually.

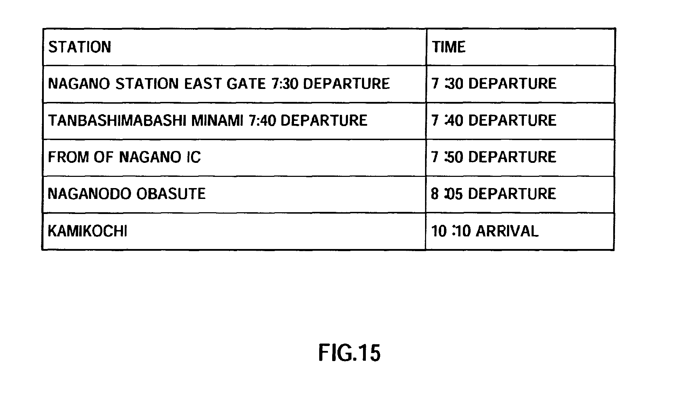

FIG.15 shows an example where bus arrival time information at different bus stops up to the destination is notified as attached information to be transmitted from the ticket inspecting machine 400 to the IC card 200 (or 600) inserted in the cellular phone set 300 (or 700).

The ticket inspecting machine is installed as a ticket inspecting machine with a contactless R/W function in a bus and the user can get a ticket inspected by bringing the cellular phone set incorporating the IC card close to the ticket inspecting machine in the bus. In this case, the display information generation section in the IC card filters the bus arrival time table information sent from the ticket inspecting machine based on prestored section information described on a ticket, determines attached information to be displayed and outputs the attached information to the cellular phone set.

The IC card which has received the bus arrival time table information from the ticket inspecting machine filters the received bus arrival time table information based on the section information of the ticket prestored in the memory, determines the attached information to be displayed shown in FIG.15 and outputs the attached information to the cellular phone set.

Therefore, information is displayed to the user with unnecessary information filtered out according to the section information of the ticket, thus allowing the user to easily know only the scheduled time of arrival at the destination without vacillating over a complicated arrival time table.

Such an arrival time guide is also easily applicable to a train time guide and also easily applicable to other types of transportation.

As described above, the terminal apparatus according to an embodiment of the present invention generates output information by filtering attached information from the terminal apparatus based on personal information of the user, determines the output function when outputting the output information based on the output information and processing capacity of the terminal apparatus and performs output processing such as display of the output information according to the determined output function, and can thereby output attached information matching the personal attribute automatically adjusted to the output function of the terminal apparatus and efficiently distribute the attached information without causing burdens on the user of the terminal apparatus and information provider.

Furthermore, the terminal apparatus according to an embodiment of the present invention generates output information in an IC card attachable/detachable to/from the terminal apparatus and capable of communicating attached information, uses personal information of the user of the terminal apparatus or personal information of the user of the IC card as personal information of the user, and can thereby generate output information using an IC card independent of the terminal apparatus, filter the attached information sent from a transmission apparatus using the personal information of the user of the terminal apparatus or personal information of the user of the IC card, supply the attached information automatically adjusted to the output function of the terminal apparatus and reliably distribute attached information according to the personal attribute without causing burdens on the user of the terminal apparatus and information provider.

Furthermore, the terminal apparatus according to an embodiment of the present invention further communicates with other communication terminals, detects the communication status and determines the output function when outputting the output information based on the output information, processing capacity of the terminal apparatus and communication status, and can thereby determine an optimum output function which also reflects the communication status.

Furthermore, the terminal apparatus according to an embodiment of the present invention includes access information indicating the access destination in attached information, accesses the access information through the communication section when the communication status indicates that a communication is possible and outputs the access result, and can thereby confirm the result of the access to the access destination at the terminal apparatus and reduce time and trouble for accessing.

Furthermore, the terminal apparatus according to an embodiment of the present invention includes access information indicating the access destination in attached information, displays and outputs the access information when the communication status indicates that a communication is possible so that access information can be accessed through a communication, and can thereby display, when the communication status indicates that a communication is possible, the access information to urge the access instead of accessing the access information, and can thereby reduce unnecessary access operations and reduce a communication/connection cost.

Furthermore, the terminal apparatus according to an embodiment of the present invention decides, when the output information filtered based on the personal information includes access information indicating the access destination, whether the access information matches the access condition which sets inaccessible addresses and types of sites, etc., according to the user of the terminal apparatus or not and when the access information does not match the access condition, the terminal apparatus does not consider the access information as output information or considers the access information as output information and considers the information indicating that the access information does not match the access condition as the output information, and therefore when the output information filtered based on the personal information of the user includes access information indicating the access destination, the terminal apparatus decides whether the access information matches the access condition according to the user of the terminal apparatus or not and considers the access information as the output information, and therefore it is possible to provide access information according to the user without causing burdens on the user of the terminal apparatus or information provider who provides attached information.

Furthermore, the terminal apparatus according to an embodiment of the present invention allows access to the access information when the attached information includes access information indicating the access destination and the communication status indicates that a communication is not possible, and outputs information urging an instruction that a communication should be enabled, and can thereby reduce unnecessary access operations and reduce a communication/connection cost.

Furthermore, the IC card according to an embodiment of the present invention outputs output information generated by filtering the attached information received by the IC card based on the personal information of the user to the terminal apparatus, and can thereby distribute attached information without causing burdens on the user of the terminal apparatus or information provider who provides attached information.

Furthermore, the IC card according to an embodiment of the present invention acquires, when connected to the terminal apparatus, the processing capacity of the terminal apparatus from the terminal apparatus, determines the output function when outputting the output information based on the output information and the acquired processing capacity of the terminal apparatus and outputs the output information and the determined output function to the terminal apparatus, and can thereby generate output information by filtering attached information sent from the transmission apparatus through the IC card, output the output information generated automatically adjusted to the output function of the terminal apparatus and distribute the attached information without causing burdens on the user of the terminal apparatus or information provider who provides attached information.

Furthermore, the IC card according to an embodiment of the present invention acquires, when connected to the terminal apparatus, information on the communication status of the terminal apparatus from the terminal apparatus and determines an output function when outputting output information based on the output information, the processing capacity of the terminal apparatus and the communication status, and can thereby automatically acquire the communication status of the terminal apparatus through the IC card, determine the output function of the terminal apparatus by also reflecting the communication status and save time and trouble in monitoring the communication status of the terminal apparatus and time and trouble in selecting the output function.

Furthermore, the attached information are congestion situations of attractions in a theme park, and information on the attractions for which the user of the terminal apparatus has already got the ticket inspected is stored as the personal information of the user, the congestion situations of attractions in the theme park which are the attached information are filtered based on the information on the attractions already subjected to ticket inspection which is the personal information of the user and only the congestion situations of the attractions for which the user of the terminal apparatus has already got the ticket inspected are generated as the output information, and therefore the user can confirm the congestion situation of popular attractions by the terminal apparatus at hand without visiting the respective locations and efficiently enjoy the theme park.

Furthermore, the attached information is sales information of merchandise, sales information of the merchandise which is attached information is filtered based on the personal information of the user and only the sales information of the merchandise that matches the personal information of the user is generated as output information, and information is thus output with unnecessary sales information filtered out based on the personal information of the user, and therefore it is possible to allow the user to efficiently visit only stores selling favorite merchandise.

Furthermore, the attached information is time information on transportation such as bus and train, section information on a ticket purchased by the user of the terminal apparatus is stored as personal information of the user, the time information on transportation which is the attached information is filtered based on the section information of the ticket which is the personal information of the user and only the time information of the transportation that matches the section information of the ticket purchased by the user of the terminal apparatus is generated as output information, and therefore information is output with unnecessary information filtered out according to the section information of the ticket, which allows the user to easily know the scheduled time of arrival at the destination without vacillating over a complicated time table.

The terminal apparatus according to an embodiment of the present invention is provided with an IC card that receives attached information from a transmission apparatus, determines the output function when outputting output information based on the output information generated by the IC card by filtering the attached information based on the personal information of the user and processing capacity of the terminal apparatus, carries out output processing on the output information according to the determined output function, and can thereby distribute the attached information without causing burdens on the user of the terminal apparatus or information provider who provides attached information.

Furthermore, the terminal apparatus according to an embodiment of the present invention is provided with an IC card that receives attached information from a transmission apparatus, carries out output processing on the output information according to the output function when outputting the output information determined based on the output information generated by the IC card by filtering the attached information based on the personal information of the user and processing capacity of the terminal apparatus, and can thereby distribute the attached information without causing burdens on the user of the terminal apparatus or information provider who provides attached information.

Furthermore, the service information providing system according to an embodiment of the present invention is a service information providing system comprising a transmission apparatus that transmits attached information and an IC card that receives attached information from an addition apparatus, wherein the IC card is incorporated in the terminal apparatus and generates output information by filtering the attached information based on personal information of the user and the terminal apparatus determines the output function when outputting the output information based on the output information and processing capacity of the terminal apparatus, and therefore it is possible to distribute the attached information without causing burdens on the user of the terminal apparatus or information provider who provides attached information.

Furthermore, the service information providing system according to an embodiment of the present invention is a service information providing system comprising a transmission apparatus that transmits attached information and a terminal apparatus that receives attached information from an addition apparatus, wherein the terminal apparatus generates output information by filtering attached information based on personal information of the user and determines the output function when outputting the output information at the terminal apparatus based on the output information and processing capacity of the terminal apparatus, and therefore it is possible to distribute the attached information without causing burdens on the user of the terminal apparatus or information provider who provides attached information.

The foregoing embodiments have explained the cellular phone set as an example of the terminal apparatus, but the present invention is not limited to this and can also be, for example, a portable type information terminal apparatus incorporating a communication function. Furthermore, the ticket inspecting machine has been explained as an example of the local server, but the present invention is not limited to this and if the present invention is applied to, for example, a POS terminal or ATM, it is also possible to distribute a store's own attached information or a financial organization's own attached information, etc.

This application is based on the Japanese Patent Application No. 2003-293194 filed on August 13, 2003 and Japanese Patent Application No.2004-231135 filed on August 6, 2004, entire content of which is expressly incorporated by reference herein.

### Industrial Applicability

The terminal apparatus, IC card and service information providing system according to the present invention has the effects of filtering attached information transmitted from a transmission apparatus such as a local server installed by an information provider based on personal attribute information registered beforehand in a terminal apparatus or IC card, enabling attached information that matches the personal information to be automatically displayed according to processing capacity, etc., of the terminal apparatus and realizing distribution of service information according to the personal attribute without causing burdens on the user of the terminal apparatus and the information provider and when the present invention is applied to a service information providing system constructed of a ticket inspecting machine, transmission apparatus such as a POS terminal and ATM, terminal apparatus such as a cellular phone set and portable type information terminal apparatus incorporating a communication function and IC card, it is possible to realize a system that distributes a store's own attached information or a financial organization's own attached information, a system that notifies a user of congestion situations of attractions in a theme park or a system that guides a user about event information or arrival time information of a vehicle such as a bus.

## Claims

1. A terminal apparatus that receives attached information from a transmission apparatus, comprising:
a generation section that generates output information by filtering said attached information based on personal information of a user;
a determination section that determines an output function when outputting output information based on the output information and processing capacity of said terminal apparatus; and
a processing section that performs output processing on said output information according to said determined output function.

2. The terminal apparatus according to claim 1, wherein said generation section is attachable/detachable to/from the terminal apparatus and incorporated in an IC card capable of receiving said attached information, and
the personal information of said user is personal information of the user of said terminal apparatus or personal information of the user of said IC card.

3. The terminal apparatus according to claim 1, further comprising a communication section that communicates with other communication terminals,
wherein said processing section further detects the communication status of said communication section, and
said determination section further determines the output function when outputting output information based on said output information, processing capacity of said terminal apparatus and said communication status.

4. The terminal apparatus according to claim 3, wherein when said attached information includes access information indicating an access destination and said communication status indicates that a communication is possible, said processing section accesses access information through said communication section and outputs the access result.

5. The terminal apparatus according to claim 3, wherein when said attached information includes access information indicating an access destination and said communication status indicates that a communication is possible, said processing section displays and outputs said access information so as to access the access information through said communication section.

6. The terminal apparatus according to claim 3, wherein when the output information filtered based on the personal information of said user includes access information indicating the access destination, said generation section decides whether the access information matches an access condition which sets inaccessible addresses and types of sites, etc., according to the user of said terminal apparatus or not, does not consider the access information as output information when the access information does not match said access condition or considers the access information as output information and considers the information indicating that the access information does not match said access condition as output information.

7. The terminal apparatus according to claim 3, wherein when said attached information includes access information indicating an access destination and said communication status indicates that a communication is notpossible, saidprocessingsectionoutputs information urging an instruction that said communication section should be enabled to communicate to make it possible to access said access information.

8. An IC card which is connected to a terminal apparatus and receives attached information from a transmission apparatus, comprising a generation section that generates output information by filtering said attached information based on the personal information of a user and outputs the output information to said terminal apparatus.

9. The IC card according to claim 8, further comprising:
a processing capacity acquisition section that acquires, when said IC card is connected to the terminal apparatus, processing capacity of said terminal apparatus from the terminal apparatus; and
a determination section that determines the output function when outputting output information based on said output information and the acquired processing capacity of said terminal apparatus,
wherein said generation section outputs said output information to said terminal apparatus and said determination section outputs the determined output function to said terminal apparatus.

10. The IC card according to claim 8, further comprising a communication status acquisition section that acquires, when said IC card is connected to the terminal apparatus, information on the communication status of said terminal apparatus from the terminal apparatus,
wherein said determination section determines the output function when outputting output information based on said output information, processing capacity of said terminal apparatus and said communication status.

11. The terminal apparatus according to claim 1, wherein said attached information is congestion situations of attractions in a theme park, and
said generation section stores information on attractions for which the user of said terminal apparatus has already got the corresponding tickets inspected as the personal information of said user, filters the congestion situations of attractions in the theme park which is said attached information based on the information on the attractions for which the corresponding tickets have been inspected which is the personal information of said user and generates only the congestion situations of the attractions for which the user of said terminal apparatus has got the tickets inspected as output information.

12. The terminal apparatus according to claim 1, wherein said attached information is sales information on merchandise, and
said generation section filters sales information of the merchandise which is said attached information based on the personal information of said user and generates only the sales information of the merchandise that matches the personal information of said user as the output information.

13. The terminal apparatus according to claim 1, wherein said attached information is time information on transportation such as a bus or train, and
said generation section stores section information of a ticket purchased by the user of said terminal apparatus, filters the time information on the transportation which is said attached information based on the section information of said ticket which is the personal information of said user and generates only the time information on said transportation that matches the section information of said ticket purchased by the user of said terminal apparatus as the output information.

14. A terminal apparatus provided with an IC card which receives attached information from a transmission apparatus, comprising:
a determination section that determines the output function when outputting output information based on the output information generated by said IC card by filtering said attached information based on personal information of the user and processing capacity of said terminal apparatus; and
a processing section that performs output processing on said output information according to said determined output function.

15. A terminal apparatus provided with an IC card which receives attached information from a transmission apparatus, comprising a processing section that performs output processing on output information according to an output function when outputting the output information determined based on output information generated by said IC card by filtering said attached information based on personal information of a user and processing capacity of said terminal apparatus.

16. A service information providing system communication system comprising:
a transmission apparatus that transmits attached information; and
an IC card that receives attached information from an addition apparatus,
wherein said IC card is inserted in a terminal apparatus and comprises:
a generation section that filters said attached information based on personal information of a user and generates output information; and
a determination section that determines an output function when said terminal apparatus outputs said output information based on said output information and processing capacity of said terminal apparatus.

17. A service information providing system comprising:
a transmission apparatus that transmits attached information; and
a terminal apparatus that receives attached information from an addition apparatus,
wherein said terminal apparatus comprises:
a generation section that filters said attached information based on personal information of a user and generates output information; and
a determination section that determines an output function when said terminal apparatus outputs said output information based on said output information and processing capacity of said terminal apparatus.
